# FASCICULE DE BREVET EUROPEEN

(11) **EP 2 177 019 B1**
(45) Date de publication et mention de la délivrance du brevet: **30.04.2014**
(21) Numéro de dépôt: 08774942.0
(22) Date de dépôt: 09.07.2008
(51) Int. Cl.: H04N 21/418, H04N 21/443, H04N 21/458, H04N 21/4623, H04N 21/81

(54) **PROCEDE D'ENVOI D'UN CODE EXECUTABLE A UN DISPOSITIF DE RECEPTION ET PROCEDE D'EXECUTION DE CE CODE**
VERFAHREN ZUM SENDEN VON AUSFÜHRBAREM CODE ZU EINER EMPFANGSEINRICHTUNG UND VERFAHREN ZUM AUSFÜHREN DIESES CODES
METHOD OF SENDING EXECUTABLE CODE TO A RECEPTION DEVICE AND METHOD OF EXECUTING THIS CODE

(30) Priorité: 10.07.2007 EP 07112160
(43) Date de publication de la demande: 21.04.2010
(73) Titulaire: Nagravision SA, 1033 Cheseaux-sur-Lausanne (CH)
(72) Inventeur: CONUS, Joël, CH-1417 Essertines-sur-Yverdon (CH); GRADASSI, Luca, CH-1008 Prilly (CH)
(74) Mandataire: Leman Consulting S.A.
(86) Numéro de dépôt international: PCT/EP2008/058937
(87) Numéro de publication internationale: WO 2009/007403

(56) Documents cités:
- EP-B1- 1 256 042
- US-A1- 2002 184 654
- US-A1- 2004 250 094

## Description

### DOMAINE TECHNIQUE

La présente invention concerne l'envoi d'un code exécutable à un dispositif de réception comportant un module de sécurité, de même que le traitement et l'exécution de ce code dans un module de sécurité comportant un microcontrôleur associé à une mémoire. Plus précisément, l'invention se propose de limiter au maximum la taille nécessaire de la partie exécutable de la mémoire, tout en permettant l'exécution de programmes de grande taille.

Cette invention peut notamment être appliquée à un module de sécurité utilisé dans le domaine de la télévision à accès conditionnel.

### TECHNIQUE ANTERIEURE

Une partie des modules de sécurité existants actuellement disposent de mémoire appartenant à au moins l'un des trois types suivants : de la mémoire de type RAM, ROM ou EEPROM. Généralement, la mémoire RAM est séparée en deux parties. L'une des parties, nommée mémoire exécutable, peut contenir un code exécutable et l'autre partie, nommée mémoire non exécutable, est telle que l'exécution de code est interdite.

Dans les mémoires de modules de sécurité en particulier, le fait de prévoir une mémoire exécutable de grande taille implique des problèmes de sécurité. En effet, l'exécution d'un code de façon inapproprié par une personne mal intentionnée peut parfois révéler des informations contenues dans le module de sécurité, mais qui sont supposées rester secrètes. De telles informations peuvent en particulier être des clés de déchiffrement. La connaissance de telles clés peut permettre une utilisation de contenu à accès conditionnel par exemple.

Afin d'éviter que de telles informations secrètes soient révélées, il est souhaitable de choisir une mémoire exécutable de petite taille. L'inconvénient de ce choix est qu'il n'est pas possible de mémoriser un programme exécutable ayant une taille plus grande que la taille de la mémoire exécutable, ce qui limite la taille des programmes. Un compromis doit donc être fait entre la sécurité associée à la taille de la mémoire et le choix des programmes exécutables qu'il est possible de mémoriser.

Le document EP 1256042 décrit un procédé dans lequel un programme exécutable est transmis à un dispositif tel qu'un décodeur de télévision à péage par exemple. Dans ce procédé, le programme exécutable est séparé en blocs, les blocs étant ensuite transmis au décodeur. Celui-ci contient deux processeurs. L'un de ces processeurs, auquel sont transmis les messages reçus, est un processeur sécurisé en charge de vérifier l'intégrité et l'authenticité des blocs. Des contre-mesures peuvent être prises en cas de bloc incorrect. Dans le cas où l'intégrité et l'authenticité sont correctes, le bloc peut être transféré à une mémoire pour stockage ou à un autre processeur qui exécute les instructions contenues dans ce bloc.

Ce document ne donne pas d'indications quant à la taille de la mémoire exécutable du processeur. Il décrit uniquement une étape de vérification préalable à l'exécution d'un code. De ce fait, il ne résout pas le problème de l'art antérieur. En effet, rien n'empêche d'utiliser un code exécutable authentique, c'est-à-dire ayant passé avec succès les étapes de vérification de l'authenticité et de l'intégrité, et de faire exécuter ce code de façon inappropriée. Cette exécution inappropriée pourrait donner des indications utiles à une personne mal intentionnée, d'autant plus utile qu'il s'agit d'un code véritable.

La présente invention se propose de pallier les inconvénients des dispositifs de l'art antérieur en réalisant une mémoire dans laquelle la taille de la mémoire exécutable est petite, de sorte que la sécurité est grande, tout en permettant l'exécution de programmes de grande taille, en particulier de taille supérieure à la taille de la mémoire exécutable.

### EXPOSE DE L'INVENTION

Le but de l'invention est atteint par un procédé d'envoi d'un code exécutable à un module de sécurité connecté localement à un dispositif de réception, ce module de sécurité comportant un microcontrôleur et une mémoire, ladite mémoire comportant au moins une zone exécutable prévue pour contenir des instructions susceptibles d'être exécutées par ledit microcontrôleur et au moins une zone non exécutable dans laquelle le microcontrôleur ne peut pas exécuter les instructions, caractérisé en ce qu'il comporte les étapes de :
a) séparation du code exécutable en blocs;
b) adjonction auxdits blocs, d'au moins un code de gestion du bloc de façon à former un bloc étendu , ce bloc étendu ayant une taille au plus égale à celle de la zone exécutable de la mémoire;
c) introduction du contenu d'un bloc étendu dans un message de type prévu pour être traité dans le dispositif de réception, de telle sorte que l'ensemble du code exécutable soit contenu dans une pluralité de messages;
d) envoi d'un message au dispositif de réception, ce message contenant l'un des blocs étendu distinct du premier bloc étendu, le premier bloc étendu contenant le début du programme exécutable;
e) traitement dudit message de façon à en extraire le bloc étendu;
f) mémorisation dans la zone exécutable de la mémoire, du code exécutable et dudit au moins un code de gestion du bloc reçu;
g) exécution d'au moins un code de gestion dudit bloc étendu, ce code de gestion ayant pour effet de transférer le contenu du bloc dans une zone non exécutable de la mémoire;
h) réitération des étapes d) à g) jusqu'à ce que tous les blocs étendus aient été mémorisés dans ladite zone non exécutable de la mémoire non exécutable à l'exception du premier bloc;
i) envoi d'un message contenant le premier bloc étendu au dispositif de réception;
j) traitement dudit message de façon à en extraire le bloc étendu;
k) mémorisation du code exécutable du bloc reçu, dans la zone exécutable de la mémoire.

Le but de l'invention est également atteint par un procédé d'exécution d'un code exécutable par un module de sécurité connecté localement à un dispositif de réception, ce module de sécurité comportant un microcontrôleur et une mémoire, ladite mémoire comportant au moins une zone exécutable prévue pour contenir des instructions susceptibles d'être exécutées par ledit microcontrôleur et au moins une zone non exécutable dans laquelle le microcontrôleur ne peut pas exécuter les instructions, ledit code exécutable ayant été envoyé selon le procédé décrit ci-dessus, caractérisé en ce qu'il comporte les étapes suivantes :
a) exécution du code exécutable mémorisé dans la zone exécutable de la mémoire;
b) exécution d'au moins un code de gestion ayant pour effet de transférer un bloc depuis la mémoire non exécutable dans la mémoire exécutable, ce bloc étant le bloc suivant celui qui vient d'être exécuté;
c) réitération des étapes a) et b) jusqu'à ce que l'exécution du code soit terminée.

Selon cette invention, la taille maximale du programme exécutable est rendue indépendante de la taille de la mémoire exécutable. Cette taille maximale dépend de la taille totale de la mémoire, c'est-à-dire de la partie exécutable et non exécutable de cette mémoire. Il est ainsi possible de disposer d'une mémoire de grande taille, ce qui permet d'utiliser de grands codes exécutables, tout en limitant la taille de la partie exécutable de la mémoire, ce qui assure une bonne sécurité et diminue le risque qu'une personne mal intentionnée puisse accéder à des informations secrètes contenues dans cette mémoire.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 représente une première étape du procédé de l'invention, correspondant à la préparation de l'envoi de code exécutable;
- les figures 2a à 2g illustrent l'état de la mémoire lors de différentes étapes de l'envoi de code à exécuter;
- les figures 3a à 3d représentent l'état de la mémoire lors de différentes étapes d'exécution du code exécutable;
- la figure 4 représente sous forme de schéma bloc, le procédé d'envoi de code exécutable selon la présente invention; et
- la figure 5 illustre le procédé d'exécution du code exécutable selon cette invention.

### MANIERE DE REALISER L'INVENTION

L'invention peut être scindée en deux parties. Une première partie concerne l'envoi du code exécutable à destination d'un dispositif de réception auquel est localement connecté un module de sécurité, ce module de sécurité comportant un microcontrôleur et une mémoire. Une seconde partie concerne l'exécution de ce code dans le module de sécurité.

En référence à ces figures, le procédé de l'invention est décrit dans un mode de réalisation dans lequel on envoie un code exécutable de "grande taille" à un dispositif de réception. Celui-ci comprend notamment un module de sécurité pourvu d'un microcontrôleur, le microcontrôleur étant en charge de l'exécution du code. Le module de sécurité comporte également une mémoire scindée en deux parties, à savoir une mémoire exécutable depuis laquelle l'exécution de code exécutable est autorisée et une mémoire non exécutable depuis laquelle l'exécution de code est interdite. Dans le contexte de l'invention, "grande taille" signifie que le code exécutable est plus grand que la taille de la mémoire exécutable ou de la mémoire exécutable disponible.

La présente invention est également décrite dans un contexte de télévision à péage, le code exécutable pouvant par exemple être un code de mise à jour pour l'accès à des données à accès conditionnel. Il doit toutefois être noté que d'autres applications pourraient utiliser le même procédé, ces applications étant toutes celles dans lesquelles un code exécutable est envoyé sous la forme de messages à destination d'un microcontrôleur.

Dans le contexte de l'invention, le code exécutable est envoyé dans un message qui peut typiquement être un message de gestion du type EMM (Entitlement Management Message). Généralement, ces messages ont soit une taille fixe, soit une taille maximale autorisée qu'il n'est pas possible de dépasser faute de quoi, le message ne pourra pas être traité. Cette taille est définie par le type d'appareil ou le type de messages utilisés et les normes concernées.

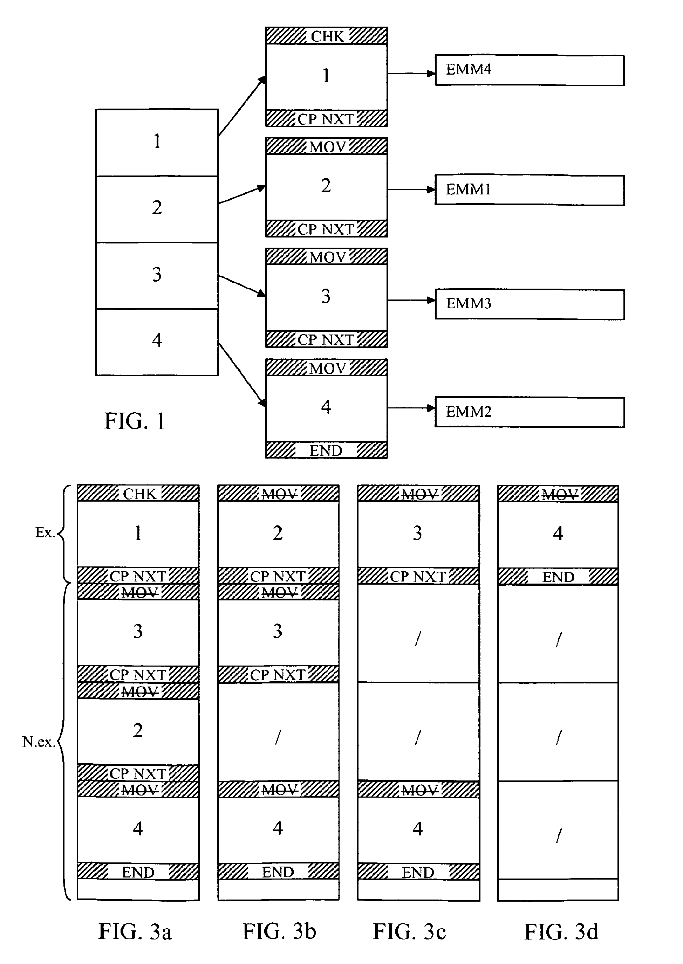

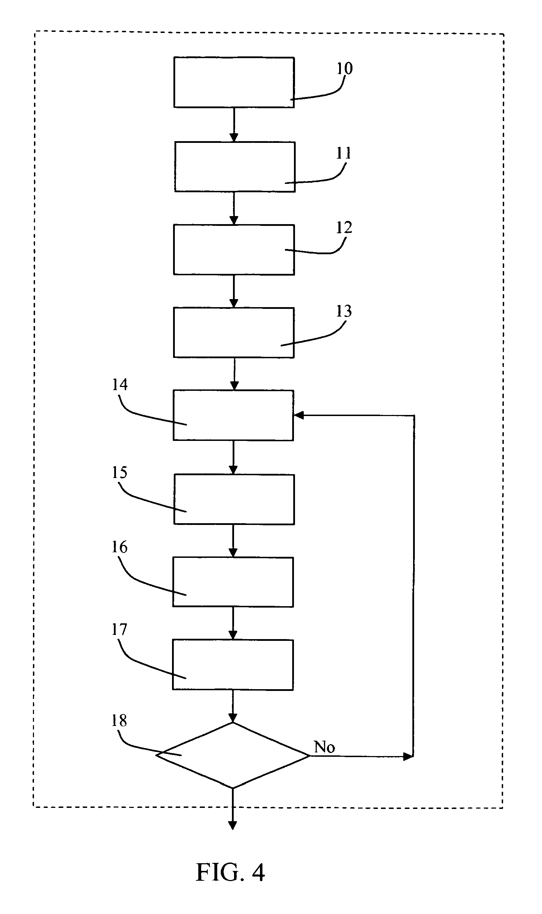

Dans une première étape du procédé d'envoi de l'invention, le code exécutable complet tel que représenté sur la partie gauche de la figure 1 et sous la référence 10 de la figure 4 est séparé en blocs de taille inférieure à la taille maximale autorisée pour un message de gestion. Selon un mode de réalisation préféré, la taille d'un bloc est également telle qu'elle est inférieure ou égale à la dimension de la mémoire exécutable à laquelle ce code est destiné. En réalité, la taille d'un tel bloc est prévue pour que, lorsqu'on lui adjoint des éléments supplémentaires comme cela est expliqué plus bas, la taille du bloc lui-même et des éléments ajoutés reste inférieure ou égale à la taille de la mémoire exécutable disponible. Cette étape de séparation en blocs est représentée par la référence 11 sur la figure 4.

L'étape suivante de ce procédé consiste à ajouter à chaque bloc, au moins un code de gestion de ce bloc. Dans la pratique, on ajoutera avantageusement deux codes de gestion, l'un d'entre eux étant placé en début du bloc et l'autre en fin du bloc. Le bloc de code exécutable et le ou les blocs de gestion est nommé ci-dessous bloc étendu. Les codes de gestion peuvent contenir plusieurs instructions, être placés à différents endroits du bloc et être différents d'un bloc à l'autre. En particulier, les codes de gestion du premier bloc, c'est-à-dire du bloc contenant le début du programme exécutable sont en principe différents des codes de gestion du dernier bloc, c'est-à-dire du bloc contenant les dernières instructions du programme. Les blocs compris entre le premier et le dernier blocs peuvent être tous identiques ou au contraire être différents les uns des autres.

A titre d'exemple, le premier bloc peut contenir un code de gestion CHK en charge de la vérification de l'authenticité et/ou de l'intégrité du bloc ou de l'ensemble du programme. Le fonctionnement de cette vérification est expliqué en détails plus bas. Le premier bloc peut également contenir un code de gestion formé d'une commande de copie CP NXT d'un bloc suivant, cette commande étant également décrite plus bas. L'adjonction des codes de gestion est représenté sous la référence 12 sur la figure 4.

Dans une étape 13 de la figure 4, chaque bloc étendu, c'est-à-dire contenant un code exécutable et au moins un code de gestion, est traité de façon à former un message de gestion EMM. Ces messages étant prêts, ils peuvent être envoyés au dispositif de réception.

Les messages de gestions sont envoyés de telle manière que le message comprenant le premier bloc du programme exécutable, à savoir le bloc qui doit être exécuté en premier, soit envoyé en dernier. L'ordre d'envoi des autres blocs du programme exécutable n'a pas d'importance. En règle générale, les messages de gestion EMM sont envoyés plusieurs fois, de façon cyclique. Cela signifie que l'on perd la notion d'ordre. Le dernier message comporte des moyens pour vérifier la présence et l'intégrité des autres messages. Si le résultat de cette vérification est positif, le procédé se poursuit. Sinon, il est nécessaire d'attendre que les messages manquants soient reçus, lors d'un cycle d'envoi ultérieur.

Dans un exemple de réalisation concret, représenté en particulier par la figure 1, le code exécutable de l'invention est séparé en quatre blocs, numérotés de 1 à 4. Deux codes de gestion sont ajoutés à chacun des blocs, puis chaque bloc associé à ses codes de gestion est introduit dans un message de gestion EMM. Le bloc 1 est introduit dans le dernier message, à savoir le message noté EMM4. Le bloc 2 est introduit par exemple dans le message EMM1, le bloc 3 dans EMM3 et finalement le bloc 4 dans EMM2.

Lorsque le code exécutable est envoyé à un dispositif de réception à microcontrôleur tel qu'un décodeur associé à un module de sécurité par exemple, le message d'autorisation EMM1 est envoyé en premier. Ceci correspond à l'étape 14 de la figure 4. Dans l'exemple choisi, cet EMM1 contient le bloc 2 du code exécutable. Lorsque le message EMM1 est reçu par le dispositif concerné, il est traité de façon à en extraire le contenu du bloc 2 et les codes de gestion qu'il contient. Cette étape porte la référence 15 sur la figure 4.

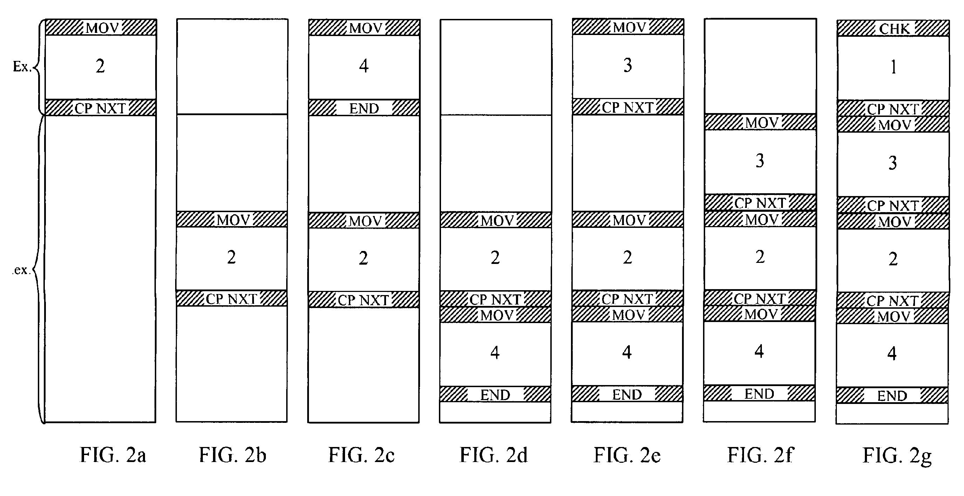

Ce contenu est placé dans la partie exécutable de la mémoire, celle-ci étant la seule capable de recevoir et de traiter un tel bloc. L'enregistrement du contenu du bloc 2 dans la mémoire exécutable correspond à l'étape 16 de la figure 4. La figure 2a illustre l'état de la mémoire après réception et mémorisation du bloc 2.

Dans les figures 2a à 2g, la partie supérieure, référencée Ex. représente la mémoire exécutable. La partie inférieure notée N.ex. représente la mémoire non exécutable ou une partie de cette mémoire non exécutable. Ainsi, dans la figure 2a, la partie exécutable contient le bloc 2 avec son code de gestion alors que la mémoire non exécutable ou au moins une partie de celle-ci est vide et/ou utilisable.

Lors de l'étape suivante, notée 17 sur la figure 4, l'un des codes de gestion du bloc 2 est exécuté. Ce code, noté MOV sur les figures 1 et 2 a pour effet de déplacer ou de copier le contenu du bloc 2 de la mémoire exécutable vers la mémoire non exécutable. Le résultat de cette opération est représenté par la figure 2b.

L'endroit dans lequel un bloc est déplacé peut être défini par avance lors de la préparation des blocs correspondant à l'étape 11. Il peut aussi être choisi en fonction de la place disponible dans la mémoire non exécutable. D'autres moyens peuvent également être envisagés tels que par exemple la séparation de la mémoire en zones de la taille d'un bloc étendu. Chaque bloc est alors placé dans l'une des zones réservées à cet effet.

Lorsque le contenu de la mémoire exécutable a été déplacé ou copié, celle-ci est de nouveau vide ou du moins réutilisable, comme cela est représenté schématiquement sur la figure 2b. Le déplacement du contenu de la mémoire est généralement effectué par une opération de copie. Dans la présente description, les termes de déplacement et de copie sont à considérer comme similaires. Un test est effectué pour vérifier si le message envoyé est le dernier message. Ce test correspond à l'étape 18 de la figure 4. Dans la pratique, le test de vérification du dernier message n'est en principe pas réalisé au moyen d'un mécanisme externe. Au contraire, le test est effectué au moyen du code de gestion du message lui-même. Comme indiqué précédemment, le test consiste à vérifier la présence de tous les messages requis ainsi que leur authenticité et/ou leur intégrité. Supposons, pour la suite de la description, que la réponse à ce test soit négative, c'est-à-dire que d'autres messages doivent être envoyés.

Le message de gestion suivant (EMM2 dans notre exemple) est alors envoyé au récepteur. Ce message de gestion contient le bloc de code exécutable 4 et les codes de gestion associés. A réception du message, le bloc de programme est extrait, puis mémorisé dans la partie exécutable de la mémoire. Ceci est représenté par la figure 2c.

Le contenu de la mémoire exécutable (bloc 4) est ensuite déplacé ou copié dans une zone non exécutable de la mémoire grâce à l'exécution d'une partie MOV du code de gestion. La figure 2d illustre le cas où le contenu du bloc 4 a été déplacé à une adresse déterminée de cette mémoire.

Le procédé se poursuit de manière similaire avec le troisième message de gestion EMM3 qui contient le bloc de code exécutable 3. Ce message est envoyé dans la mémoire exécutable, comme cela est représenté par la figure 2e, puis déplacé dans une zone libre non exécutable de la mémoire, comme cela est représenté par la figure 2f.

Le dernier message EMM4 est ensuite envoyé. Ce dernier message contient le premier bloc de code, noté 1 dans notre exemple. Ce message est reçu par le récepteur, puis traité de façon à en extraire le contenu et à le mémoriser dans la partie exécutable de la mémoire.

Contrairement aux autres messages, ce bloc ne contient pas comme code de gestion, une commande de déplacement. De ce fait, le contenu de ce bloc n'est pas déplacé dans une zone non exécutable de la mémoire, mais reste dans la mémoire exécutable. La réponse au test de l'étape 18 de la figure 4 est donc positive pour le bloc 1. La mémoire est telle que représentée par la figure 2g.

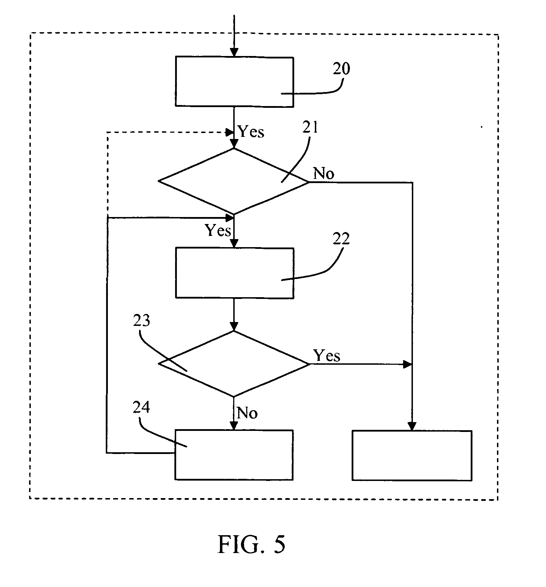

La figure 5 représente le procédé d'exécution du code exécutable qui a été envoyé conformément au procédé d'envoi décrit ci-dessus. Les figures 3a à 3d représentent le contenu de la mémoire lors de différentes étapes d'exécution du code exécutable.

Le démarrage du procédé d'exécution est représenté sous la référence 20 dans la figure 5. Le contenu de la mémoire est représenté par la figure 3a. Il est à noter que ce contenu est identique au contenu tel que représenté par la figure 2g.

La mémoire exécutable contient le bloc 1 et ses codes de gestion. L'un des codes de gestion contient un ensemble d'instructions de contrôle CHK. Les instructions de contrôle CHK sont destinées à la vérification de l'authenticité et/ou de l'intégrité du programme exécutable ou du bloc d'instructions. Cette vérification peut par exemple calculer une signature ou une autre figure d'intégrité formée à partir des instructions relatives au code exécutable du bloc 1 ou à l'ensemble des blocs, la signature calculée étant ensuite comparée à une signature contenue dans le bloc lui-même. Il est clair que toutes sortes d'autres méthodes de vérification peuvent être implémentées dans le contexte de l'invention. La vérification porte la référence 21 sur la figure 5.

Dans la pratique, on vérifiera généralement l'intégrité de l'ensemble du programme et pas nécessairement celle de chacun des blocs un par un, bien que cette deuxième solution ne soit pas exclue. Il est clair qu'en principe, si l'un des blocs est corrompu ou absent, une vérification sur l'ensemble du programme sera en mesure de détecter cette erreur.

Si l'étape de vérification est passée avec succès, la mémoire exécutable exécute les instructions contenues dans le bloc 1 de façon conventionnelle. Ceci correspond à l'étape 22 de la figure 5. Lorsque cette exécution est terminée, il est vérifié si le bloc contient comme code de gestion, une indication de fin. Cette vérification porte la référence 23 sur la figure 5. Pour la suite de la description, supposons que la réponse à ce test soit négative. Le code de gestion placé à la fin du bloc 1 est lu. Ce code comprend des instructions de copie du bloc suivant CP NXT. Lorsque ce code de gestion est exécuté, ce qui correspond à l'étape 24 de la figure 5, le contenu de la mémoire exécutable est remplacé par le bloc suivant qui doit être exécuté. Dans notre exemple, le bloc suivant est le bloc 2. L'adresse à laquelle a été placé le bloc suivant peut être contenue dans une table, dans le bloc précédent ou être trouvé de toute autre manière adéquate, par exemple au moyen d'un identifiant du bloc.

L'état de la mémoire après copie du bloc est représenté par la figure 3b. Selon cette figure, la mémoire exécutable contient le bloc 2. Il est clair que les instructions de déplacement, formant une partie du code de gestion et placées en début de ce bloc, ne doivent pas être exécutées. Une solution consiste à ne pas copier les instructions de déplacement lors de la copie du bloc étendu de la mémoire exécutable à la mémoire exécutable. Il est également possible de sauter ces instructions par exemple au moyen d'un marqueur qui change d'état lorsque les instructions ont été effectuées une première fois (lors de l'étape 17 de la figure 4). Il est également possible d'effacer ces instructions lors du déplacement du bloc dans la mémoire non exécutable.

Selon une variante particulière de l'invention, si le code de gestion du bloc 2 contient un code d'authentification et/ou de vérification d'intégrité, le procédé retourne à l'étape 21 de la figure 5, sinon, il retourne à l'étape 22.

Le contenu du bloc 2 est donc exécuté lors de cette étape, puis il est vérifié si ce bloc contient une instruction de fin.

La zone de la mémoire qui contenait préalablement le bloc 2 peut être vide ou réutilisable. Le bloc 1 ne figure plus dans la mémoire.

Comme précédemment, le bloc 2 contient un code de gestion CP NXT qui a pour effet de copier le contenu du bloc suivant dans la mémoire exécutable.

La figure 3c représente l'état de la mémoire après copie de ce bloc suivant. Le bloc 3, préalablement stocké dans la mémoire non exécutable, est déplacé dans la mémoire exécutable. Le bloc 2 est éliminé. Le traitement du bloc 3 se fait comme précédemment et se termine par la copie du dernier bloc 4 dans la mémoire exécutable.

Le code du bloc 4 est exécuté comme précédemment. Le code de gestion de ce dernier bloc contient un marqueur de fin END. Le marqueur de fin peut être par exemple une instruction qui rend le contrôle de l'exécution d'instructions à un système d'exploitation. Lors de la fin du programme, étape référencée par 23 sur la figure 5, ce marqueur ou cette instruction de fin sera détecté et le programme sera terminé. Le programme peut se terminer par un effacement de la mémoire exécutable afin qu'aucune partie du programme ne reste stockée et éventuellement accessible.

La présente invention est expliquée dans un exemple dans lequel le code exécutable est séparé en quatre blocs. Il est clair que le nombre de blocs peut être différent et en particulier bien plus élevé.

Le type de messages utilisé pour la description de l'invention est un message de gestion EMM. D'autres types de messages pourraient également être utilisés, en particulier des formats propriétaires.

Les codes de gestion introduits dans les blocs sont utilisés pour gérer le déplacement des instructions dans la mémoire aussi bien lors de l'envoi du code que lors de son exécution. Certains codes de gestion ne sont toutefois pas indispensables à la bonne marche du procédé. En particulier, les codes liés à l'authentification et/ou à la vérification de l'intégrité du contenu des blocs peuvent être supprimés, cette suppression se faisant toutefois au détriment de la sécurité et/ou de la fiabilité.

Le procédé d'envoi d'un code selon l'invention a été décrit dans un mode de réalisation dans lequel un code exécutable est envoyé à la fois, c'est-à-dire que ce code est totalement traité avant qu'un autre code exécutable soit envoyé. Dans la pratique, il est possible d'envoyer des messages correspondant à plusieurs codes exécutables. Comme les messages sont généralement envoyés de façon cyclique, plusieurs blocs de plusieurs codes exécutables peuvent être envoyés dans des périodes qui se chevauchent. Dans ce cas, il est possible d'ajouter aux messages un identifiant qui indique à quel code exécutable, un message déterminé appartient. Ces messages peuvent être filtrés de façon à ne traiter qu'un seul code exécutable à la fois ou au contraire, ils peuvent être mémorisés dans la mémoire en des emplacements différents.

Selon la description de la présente invention, les codes de gestion sont associés aux blocs de code exécutable pour former des blocs étendus. Dans un mode de réalisation particulier de l'invention, les codes de gestion pourraient être formés non pas de code exécutable, mais simplement de marqueurs correspondant chacun à une instruction spécifique. Dans ce cas, ces marqueurs sont interprétés par le module de sécurité qui est en charge d'effectuer les opérations décrites précédemment, en fonction de la valeur de ces marqueurs.

Grâce à ce procédé, il est possible d'une part de prévoir une mémoire exécutable de taille modeste, ce qui permet d'améliorer la sécurité en offrant peu de prise à une éventuelle attaque, et d'autre part, d'envoyer et d'exécuter des programmes de grande taille, sans que ceux-ci soient limités par la taille de la mémoire exécutable.

## Revendications

1. Procédé d'envoi d'un code exécutable à un module de sécurité connecté localement à un dispositif de réception, ce module de sécurité comportant un microcontrôleur et une mémoire, ladite mémoire comportant au moins une zone exécutable prévue pour contenir des instructions susceptibles d'être exécutées par ledit microcontrôleur et au moins une zone non exécutable dans laquelle le microcontrôleur ne peut pas exécuter les instructions, **caractérisé en ce qu'**il comporte les étapes de :
a) séparation du code exécutable en blocs;
b) adjonction auxdits blocs, d'au moins un code de gestion du bloc de façon à former un bloc étendu, ce bloc étendu ayant une taille au plus égale à celle de la zone exécutable de la mémoire, ce code de gestion étant exécutable par ledit microcontrôleur;
c) introduction du contenu d'un bloc étendu dans un message de type prévu pour être traité dans le dispositif de réception, de telle sorte que l'ensemble du code exécutable soit contenu dans une pluralité de messages;
d) envoi d'un message au dispositif de réception, ce message contenant l'un des blocs étendu distinct du premier bloc étendu, le premier bloc étendu contenant le début du programme exécutable;
e) traitement dudit message de façon à en extraire le bloc étendu;
f) mémorisation dans la zone exécutable de la mémoire, du code exécutable et dudit au moins un code de gestion du bloc reçu;
g) exécution d'au moins un code de gestion dudit bloc étendu, ce code de gestion ayant pour effet de transférer le contenu du bloc dans une zone non exécutable de la mémoire;
h) réitération des étapes d) à g) jusqu'à ce que tous les blocs étendus aient été mémorisés dans ladite zone non exécutable de la mémoire à l'exception du premier bloc;
i) envoi d'un message contenant le premier bloc étendu au dispositif de réception;
j) traitement dudit message de façon à en extraire le bloc étendu;
k) mémorisation du code exécutable du bloc reçu, dans la zone exécutable de la mémoire.

2. Procédé selon la revendication 1, **caractérisé en ce que** les messages envoyés sont de type messages de gestion EMM.

3. Procédé selon la revendication 1, **caractérisé en ce que** les messages sont identiques pour une pluralité d'utilisateurs.

4. Procédé selon la revendication 1, **caractérisé en ce que** les messages sont uniques et différents pour chaque utilisateur.

5. Procédé selon la revendication 1, **caractérisé en ce que** la taille des blocs étendus est inférieure à la taille de la mémoire exécutable.

6. Procédé selon la revendication 1, **caractérisé en ce que** ledit code de gestion comprend des instructions ayant au moins l'un des effets suivants : vérification d'authenticité et/ou d'intégrité d'au moins un bloc de code exécutable; déplacement ou copie du contenu d'un bloc de la mémoire exécutable à la mémoire non exécutable; déplacement du contenu d'un bloc de la mémoire non exécutable à la mémoire exécutable; marqueur de fin de programme; suppression d'un code de gestion préalablement exécuté.

7. Procédé selon la revendication 1, **caractérisé en ce que** le code de gestion est formé d'au moins un marqueur, et **en ce que** l'exécution du code de gestion comprend une étape d'exécution d'un code exécutable associé à ce marqueur.

8. Procédé d'exécution d'un code exécutable par un module de sécurité connecté localement à un dispositif de réception, ce module de sécurité comportant un microcontrôleur et une mémoire, ladite mémoire comportant au moins une zone exécutable prévue pour contenir des instructions susceptibles d'être exécutées par ledit microcontrôleur et au moins une zone non exécutable dans laquelle le microcontrôleur ne peut pas exécuter les instructions, ledit code exécutable ayant été envoyé selon le procédé de la revendication 1, **caractérisé en ce qu'**il comporte les étapes suivantes :
a) exécution du code exécutable mémorisé dans la zone exécutable de la mémoire;
b) exécution d'au moins un code de gestion ayant pour effet de transférer un bloc depuis la mémoire non exécutable dans la mémoire exécutable, ce bloc étant le bloc suivant celui qui vient d'être exécuté;
c) réitération des étapes a) et b) jusqu'à ce que l'exécution du code soit terminée.

9. Procédé selon la revendication 8, **caractérisé en ce qu'**il comporte une étape de vérification d'intégrité et/ou d'authenticité du code préalable à la première exécution du code mémorisé dans la zone exécutable de la mémoire.

10. Procédé selon la revendication 9, **caractérisé en ce qu'**il comporte une étape de vérification d'intégrité et/ou d'authenticité du code préalable aux exécutions ultérieures du code mémorisé dans la zone exécutable de la mémoire.

11. Procédé selon la revendication 9 ou 10, **caractérisé en ce que** l'étape de vérification d'intégrité et/ou d'authenticité comporte une étape de comparaison d'une signature et/ou d'une figure d'intégrité calculée d'après les instructions à exécuter et d'une signature mémorisée dans le bloc.

12. Procédé selon la revendication 8, **caractérisé en ce qu'**au moins l'un des blocs contient une instruction de fin d'exécution, cette instruction mettant fin à l'exécution du code.

## Patentansprüche

1. Verfahren zur Übersendung eines ausführbaren Codes an ein Sicherheitsmodul, das örtlich mit einer Empfangsvorrichtung verbunden ist, wobei das Sicherheitsmodul einen Mikrocontroller und einen Speicher umfasst, wobei der Speicher mindestens einen ausführbaren Bereich umfasst, um Anweisungen zu enthalten, die der Mikrocontroller ausführen kann, und mindestens einen nicht ausführbaren Bereich, in dem der Mikrocontroller die Anweisungen nicht ausführen kann, **gekennzeichnet durch** folgende Phasen:
a) Unterteilung des ausführbaren Codes in Blöcke;
b) Ausstattung der genannten Blöcke mit mindestens ein Verwaltungscode des Blocks, um einen erweiterten Block zu bilden, dessen Größe maximal gleich der des ausführbaren Bereichs des Speichers ist; wobei dieser Verwaltungscode vom Mikrocontroller ausführbar ist;
c) Einführung des Inhalts eines erweiterten Blocks in eine Nachricht, die in der Empfangsvorrichtung behandelt werden soll, so dass der gesamte ausführbare Code in einer Vielzahl von Nachrichten enthalten ist;
d) Sendung einer Nachricht an die Empfangsvorrichtung, wobei diese Nachricht den einen der erweiterten Blöcke enthält, der vom ersten erweiterten Block unterschieden ist, wobei der erste erweiterte Block den Beginn des ausführbaren Programms enthält;
e) Behandlung der genannten Nachricht, um den erweiterten Block daraus zu extrahieren;
f) Speicherung, in dem ausführbaren Bereich des Speichers, des ausführbaren Codes und des genannten mindestens einen Verwaltungscodes des empfangenen Blockes;
g) Ausführung mindestens eines Verwaltungscodes des genannten erweiterten Blocks, wobei dieser Verwaltungscode bewirkt, dass der Inhalt des Blocks in einen nicht ausführbaren Bereich des Speichers überführt wird;
h) Wiederholung der Phasen d) bis g) bis alle erweiterten Blöcke im nicht ausführbaren Bereich des Speichers gespeichert worden sind, mit Ausnahme des ersten Blockes;
i) Sendung einer Nachricht, die den ersten erweiterten Block enthält, an die Empfangsvorrichtung;
j) Behandlung der genannten Nachricht, um ihren erweiterten Block zu extrahieren;
k) Speicherung des ausführbaren Codes des empfangenen Blocks in dem ausführbaren Bereich des Speichers.

2. Verfahren nach Anspruch 1, **gekennzeichnet dadurch, dass** die versandten Nachrichten EMM-Verwaltungsnachrichten sind.

3. Verfahren nach Anspruch 1, **gekennzeichnet dadurch, dass** die Nachrichten für eine Vielzahl von Nutzern identisch sind.

4. Verfahren nach Anspruch 1, **gekennzeichnet dadurch dass** die Nachrichten für jeden Nutzer eindeutig und verschieden sind.

5. Verfahren nach Anspruch 1, **gekennzeichnet dadurch, dass** die Größe der erweiterten Blöcke kleiner als die Größe des ausführbaren Speichers ist.

6. Verfahren nach Anspruch 1, **gekennzeichnet dadurch, dass** besagter Verwaltungscode Anweisungen mit mindestens einer der folgenden Auswirkungen umfasst: Prüfung der Echtheit und/oder Integrität mindestens eines ausführbaren Codeblocks ; Verschiebung oder Kopie des Inhalts eines Blocks des ausführbaren Speichers in den nicht ausführbaren Speicher; Verschiebung des Inhalts eines Blocks des nicht ausführbaren Speichers in den ausführbaren Speicher; Programmendmarkierung; Beseitigung eines vorher ausgeführten Verwaltungscodes.

7. Verfahren nach Anspruch 1, **gekennzeichnet dadurch, dass** der Verwaltungscode aus mindestens einem Markierer besteht, sowie dadurch, dass die Ausführung des Verwaltungscodes eine Ausführungsphase eines ausführbaren Codes umfasst, der mit diesem Markierer verbunden ist.

8. Verfahren zur Ausführung eines ausführbaren Codes durch ein Sicherheitsmodul, das örtlich mit einer Empfangvorrichtung verbunden ist, wobei das Sicherheitsmodul einen Mikrocontroller und einen Speicher umfasst, wobei der Speicher mindestens einen ausführbaren Bereich umfasst, um Anweisungen zu enthalten, die der Mikrokontrolleur ausführen kann, und mindestens einen nicht ausführbaren Bereich, in dem der Mikrocontroller die Anweisungen nicht ausführen kann, wobei der ausführbare Code nach dem Verfahren des Anspruchs 1 gesendet wurde, **gekennzeichnet dadurch, dass** es die folgenden Schritte umfasst:
a) Ausführung des ausführbaren Codes, der in dem ausführbaren Bereich des Speichers gespeichert ist;
b) Ausführung mindestens eines Verwaltungscodes, was bewirkt, dass ein Block von dem nicht ausführbaren Speicher in den ausführbaren Speicher überführt wird, wobei dieser Block auf den Block folgt, der gerade ausgeführt wurde;
c) Wiederholung der Phasen a) und b), bis die Ausführung des Codes beendet ist.

9. Verfahren nach Anspruch 8, **gekennzeichnet dadurch, dass** es eine Phase der Prüfung der Integrität und/oder Echtheit des Codes vor der ersten Ausführung des Codes umfasst, der in dem ausführbaren Bereich des Speichers gespeichert ist.

10. Verfahren nach Anspruch 9, **gekennzeichnet dadurch, dass** es eine Phase der Prüfung der Integrität und/oder Echtheit des Codes vor den weiteren Ausführungen des Codes umfasst, der in dem ausführbaren Bereich des Speichers gespeichert ist.

11. Verfahren nach Anspruch 9 oder 10, **gekennzeichnet dadurch dass** die Phase der Prüfung der Integrität und/oder Echtheit eine Phase des Vergleichs einer Unterschrift und/oder einer Integritätsfigur umfasst, die nach den auszuführenden Anweisungen berechnet wird, sowie einer Unterschrift, die in dem Block gespeichert ist.

12. Verfahren nach Anspruch 8, **gekennzeichnet dadurch, dass** mindestens einer der Blöcke eine Ausführungsendanweisung enthält, die die Ausführung des Codes beendet.

## Claims

1. Process for sending an executable code to a security module locally connected to a receiving device, this security module comprising a microcontroller and a memory, said memory comprising at least an executable area provided to contain instructions suitable for being executed by said microcontroller, and at least a non-executable area, wherein the microcontroller cannot execute the instructions, **characterized in that** it comprises the steps of:
a) dividing the executable code into blocks;
b) adding at least one block management code to said blocks, in order to create an extended block, this extended block having a size at the most equal to that of the executable area of the memory, said management code being executable by said microcontroller;
c) introducing the content of an extended block in a message of a type foreseen to be processed in the receiving device, in such a way that the whole executable code is contained in a plurality of messages;
d) sending a message to the receiving device, this message containing one of the extended blocks different from the first extended block, the first extended block containing the start of the executable program;
e) processing said message in order to extract its extended block;
f) storing the executable code and said at least one management code of the block received in the executable area of the memory;
g) executing at least one management code of said extended block, this management code having the effect of transferring the content of the block into a non-executable area of the memory;
h) repeating the steps d) to g) until all the extended blocks are stored in said non-executable area of the memory, except for the first block;
i) sending a message containing the first extended block to the receiving device;
j) processing said message in order to extract its extended block;
k) storing the executable code of the block received in the executable area of the memory.

2. Process according to claim 1, **characterized in that** the messages sent are of the type of entitlement management messages EMM.

3. Process according to claim 1, **characterized in that** the messages are identical for a plurality of users.

4. Process according to claim 1, **characterized in that** the messages are unique and different for each user.

5. Process according to claim 1, **characterized in that** the size of the extended blocks is smaller than the size of the executable memory.

6. Process according to claim 1, **characterized in that** said management code comprises instructions having at least one of the following effects: verification of authenticity and/or integrity of at least one block of executable code; transfer or copy of the content of a block from the executable memory to the non-executable memory; transfer of the content of a block from the non-executable memory to the executable memory; program end marker; removal of a previously executed management code.

7. Process according to claim 1, **characterized in that** the management code is formed by at least one marker, and **in that** the execution of the management code comprises a step of execution of an executable code associated with this marker.

8. Process for the execution of an executable code by a security module locally connected to a receiving device, this security module comprising a microcontroller and a memory, said memory comprising at least an executable area provided to contain instructions suitable for being executed by said microcontroller, and at least a non-executable area wherein the microcontroller cannot execute the instructions, said executable code having been sent according to the process of claim 1, **characterized in that** it comprises the following steps:
a) execution of the executable code stored in the executable area of the memory;
b) execution of at least one management code having the effect of transferring a block from the non-executable memory to the executable memory, this block being the block following the block that has just been executed;
c) repetition of the steps a) and b) until the execution of the code is terminated.

9. Process according to claim 8, **characterized in that** it comprises a step of verification of the integrity and/or authenticity of the code prior to the first execution of the code stored in the executable area of the memory.

10. Process according to claim 9, **characterized in that** it comprises a step of verification of the integrity and/or authenticity of the code prior to the further executions of the code stored in the executable area of the memory.

11. Process according to claim 9 or 10, **characterized in that** the step of verification of the integrity and/or authenticity comprises a step of comparing a signature and/or integrity figure calculated according to the instructions to be executed and to a signature stored in the block.

12. Process according to claim 8, **characterized in that** at least one of the blocks contains an instruction of end of execution, this instruction terminating the execution of the code.
